# EUROPÄISCHE PATENTSCHRIFT

(11) **EP 2 979 058 B1**
(45) Veröffentlichungstag und Bekanntmachung des Hinweises auf die Patenterteilung: **26.12.2018**
(21) Anmeldenummer: 14730730.0
(22) Anmeldetag: 17.03.2014
(51) Int. Cl.: G01B 11/16, G06Q 10/08, G06Q 90/00

(54) **VERFAHREN ZUR BESTIMMUNG EINER BESCHÄDIGUNG EINES FAHRZEUGS**
METHOD FOR DETERMINING DAMAGE TO A VEHICLE
PROCÉDÉ DE DÉTERMINATION D'UN DOMMAGE SUR UN VÉHICULE

(30) Priorität: 26.03.2013 DE 102013005120
(43) Veröffentlichungstag der Anmeldung: 03.02.2016
(73) Patentinhaber: API International AG, 9050 Appenzell (CH)
(72) Erfinder: BUGOVICS, Jozsef, 04109 Leipzig (DE)
(74) Vertreter: Weihrauch, Frank
(86) Internationale Anmeldenummer: PCT/DE2014/000131
(87) Internationale Veröffentlichungsnummer: WO 2014/154194

(56) Entgegenhaltungen:
- EP-A1- 0 644 501
- WO-A1-2005/109263
- US-A1- 2009 138 290

## Beschreibung

Die Erfindung betrifft ein Verfahren zur Bestimmung einer Beschädigung eines Fahrzeugs, insbesondere der Karosserie infolge eines Unfalls oder anderer äußerer Einwirkungen.

Zum Bestimmen von Reparaturkosten bei Karosserieschäden erfolgt üblicherweise eine visuelle Kontrolle und bedarfsweise die Ermittlung bestimmter Messwerte durch Werkstattpersonal oder Gutachter, auf deren Basis entschieden wird, welche Teile zu ersetzen und welche Richtarbeiten gegebenenfalls erforderlich sind.

Mit Hilfe bekannter computergestützter Schadenkalkulationssysteme, die auf Ersatzteilpreise und den für die Reparatur erforderlichen Arbeitszeitaufwand zurückgreifen, können zu erwartendende Reparaturkosten ermittelt werden. Ein solches Verfahren ist z.B. aus der WO 2005/109263 A1 bekannt.

Verdeckte Schäden, die durch Deformationen in bestimmten Bereichen in Abhängigkeit von der Eindringtiefe entstanden sind, werden nicht immer oder nur nach Demontage verdeckender Teile erkannt.

Eine automatische Kalkulation der Reparaturkosten ist mit bekannten Schadenkalkulationssystemen nicht in vollem Umfang möglich.

Die Aufgabe der Erfindung besteht darin, ein Verfahren zur Bestimmung von Beschädigungen von Fahrzeugen mittels optischer Erfassung der Oberfläche eines Fahrzeuges, welches einfach und kostengünstig durchführbar ist, aufzuzeigen. Die Aufgabe wird durch ein Verfahren mit den im Patentanspruch 1 aufgeführten Merkmalen gelöst. Bevorzugte Weiterbildungen ergeben sich aus den abhängigen Ansprüchen.

Bei einem erfindungsgemäßen Verfahren zum Bestimmen einer Beschädigung eines Fahrzeugs werden eine optische Erfassungseinheit, mit der eine Oberfläche eines Fahrzeuges dreidimensional erfassbar ist, und eine Auswerteeinheit, die mit der optischen Erfassungseinheit verbunden ist und mit der die Daten der dreidimensional erfassten Oberfläche verarbeitbar und die Raumkoordinatendaten der dreidimensional erfassten Oberfläche ermittelbar sind, genutzt.

Die Auswerteeinheit weist eine Datenbank auf, in der Fahrzeugmodelldaten und Vorgangsdatensätze speicherbar sind. Als Datenbank ist jede Datenbasis zu verstehen, wobei auch physisch oder räumlich verteilte Datenträger als Datenbank im Sinne der Erfindung zu verstehen sind.

Fahrzeugmodelldaten weisen Fahrzeugtypendaten, also Daten zur Identifikation eines Fahrzeugtyps, und Norm-Raumkoordinatendaten, die der unverformten dreidimensionalen Form der Oberfläche eines Fahrzeugs des entsprechenden Fahrzeugtyps entsprechen, auf.

Ein Vorgangsdatensatz weist Beschädigungsdaten, Reparaturdaten sowie optional Vorgangszusatzdaten auf.

Die Beschädigungsdaten weisen Fahrzeugtypendaten, also Daten zur Identifikation des Fahrzeugtyps des beschädigten Fahrzeugs, Flächenkoordinatendaten der Raumkoordinatendaten eines Beschädigungsbereichs der Oberfläche eines Fahrzeugs, und Verformungstiefendaten auf.

Die Reparaturdaten weisen Ersatzteildaten, also Daten zu den aufgrund der Beschädigung auszutauschenden bzw. zu reparierenden Ersatzteilen, sowie Arbeitszeitdaten, also Daten zu der aufzuwendenden Arbeitszeit für die Reparaturtätigkeiten, vorzugsweise geordnet nach der Art der Reparaturtätigkeiten, auf. Die optionalen Vorgangszusatzdaten können insbesondere Reparaturkostendaten, also Daten zu den tatsächlichen Reparaturkosten, Fahrzeughalterdaten wie Namen, Alter, Region, Beruf und so weiter, Laufleistungsdaten sowie Beschädigungsereignisdaten, also beispielsweise Angaben zu einem Unfallhergang oder zu einem Kollisionspartner, aufweisen.

In der Datenbank der Auswerteeinheit wird für jeden Schadensfall mit Bestimmung der Beschädigung des Fahrzeugs ein Vorgangsdatensatz angelegt, der Beschädigungsdaten, also Fahrzeugtypendaten, Flächenkoordinatendaten der Raumkoordinatendaten eines Beschädigungsbereichs der Oberfläche des Fahrzeugs und Verformungstiefendaten, aufweist.

Bei den Verformungstiefendaten handelt es sich um die größte negative Differenz zwischen den Tiefenkoordinatendaten der Raumkoordinatendaten im Beschädigungsbereich der Oberfläche des Fahrzeugs und den in der Datenbank abgelegten Norm-Raumkoordinatendaten der unverformten ursprünglichen dreidimensionalen Form der Oberfläche des jeweiligen Fahrzeugtyps.

Die Verformungstiefendaten werden also aus den mittels der optischen Erfassungseinheit erfassten und durch die Auswerteeinheit durch Datenverarbeitung ermittelten Raumkoordinatendaten des Beschädigungsbereichs im Vergleich zu den mittels der Datenbank verfügbaren zugehörigen Norm-Raumkoordinatendaten anhand übereinstimmender Flächenkoordinaten gebildet, wobei eine zutreffende Zuordnung durch die Fahrzeugtypendaten sichergestellt wird.

Bei einem Zugriff auf einen Vorgangsdatensatz eines Schadensfalls sind neben den Flächenkoordinatendaten und den zugehörigen Verformungstiefendaten vorzugsweise auch die Norm-Raumkoordinatendaten verfügbar.

Das Verfahren weist einen Zustandserfassungsvorgang und einen nachfolgenden Auswertungs- und Zuordnungsvorgang auf.

In dem Zustandserfassungsvorgang wird zur Bestimmung der Beschädigung die Oberfläche des Fahrzeugs in dem Beschädigungsbereich mittels der optischen Erfassungseinheit optisch dreidimensional erfasst. Beispielsweise können Stereokamera- oder Laserscannererfassungen erfolgen.

Im Beschädigungsbereich werden die Raumkoordinatendaten und die Flächenkoordinatendaten der Raumkoordinatendaten des Beschädigungsbereichs ermittelt und aus den Raumkoordinatendaten des Beschädigungsbereichs und den Norm-Raumkoordinatendaten des Beschädigungsbereichs die Verformungstiefendaten bestimmt, wobei es sich bei den Verformungstiefendaten um die größte negative Differenz zwischen den Tiefenkoordinatendaten der Raumkoordinaten und der Tiefenkoordinatendaten der Norm-Raumkoordinatendaten handelt.

Die Bestimmung der Verformungstiefendaten aus den Raumkoordinatendaten und den Flächenkoordinatendaten der Raumkoordinatendaten des Beschädigungsbereichs erfolgt im Rückgriff auf die Norm-Raumkoordinatendaten für den entsprechenden Fahrzeugtyp.

Die Norm-Raumkoordinatendaten sind vorzugsweise aus der Datenbasis der Datenbank der Auswerteeinheit entnehmbar. Es ist aber auch möglich, Norm-Raumkoordinatendaten der unverformten ursprünglichen dreidimensionalen Form der Oberfläche des jeweiligen Fahrzeugtyps im Zugriff auf externe Datenbanken, wie von Fahrzeugherstellern, zu übernehmen.

Die im Zustandserfassungsvorgang bestimmten Flächenkoordinatendaten und die zugehörigen Verformungstiefendaten werden als Beschädigungsdaten in dem Vorgangsdatensatz gespeichert.

In dem nachfolgenden Auswertungs- und Zuordnungsvorgang führt die Auswerteeinheit eine Datenbankabfrage nach bestehenden Vorgangsdatensätzen mit solchen bestehenden Flächenkoordinatendaten durch, die den im Zustandserfassungsvorgang bestimmten Flächenkoordinatendaten entsprechen.

Sofern bestehende Vorgangsdatensätze mit entsprechenden Flächenkoordinaten im Auswertungs- und Zuordnungsvorgang aufgefunden werden, werden diese oder Teile hiervon ausgegeben. Dabei werden als entsprechende Flächenkoordinaten solche Flächenkoordinaten bestehenden Vorgangsdatensätze verstanden, bei denen eine Übereinstimmung oder zumindest Teilübereinstimmung der im Beschädigungsbereich bestimmten Flächenkoordinatendaten mit Flächenkoordinatendaten aus bestehenden Beschädigungsdaten von in der Datenbank der Auswerteeinheit abgelegten bestehenden Vorgangsdatensätzen vorliegt.

Optional erfolgt die Ausgabe von bestehenden Vorgangsdatensätze in einer Ordnung nach dem Grad der Übereinstimmung zwischen den im Beschädigungsbereich bestimmten Verformungstiefendaten und den in bestehenden Vorgangsdatensätzen gespeicherten Verformungstiefendaten.

Der Vorteil des Verfahrens besteht darin, dass gegenüber herkömmlichen Systemen zur Schadensanalyse bei Beschädigungen der Karosserie und Ermittlung des entsprechenden Umfangs der Reparatur eines Fahrzeugs der Zeitaufwand durch die automatische Bestimmung der Beschädigung wesentlich geringer ist.

Mit der Nutzung von Flächenkoordinatendaten, in Anlehnung an ein geodätisches Gitter, ist eine schnelle Zuordnung von aktuellen Verformungstiefendaten im Beschädigungsbereich bei der Datenbankabfrage nach bestehenden Vorgangsdatensätzen mit gleichen oder ähnlichen Verformungstiefendaten eines identischen Fahrzeugtyps gewährleistet, da nicht die gesamten Norm-Raumkoordinatendaten der unverformten ursprünglichen dreidimensionalen Form der Oberfläche des jeweiligen Fahrzeugtyps mit denen des Fahrzeugs mit einer Beschädigung korreliert werden müssen, sondern nur in einem Beschädigungsbereich mit identischen oder ähnlichen Flächenkoordinatendaten.

Der Umfang der Reparatur ist mit der Ausgabe von zutreffenden, bestehenden Vorgangsdatensätzen früherer identischer oder ähnlicher Beschädigungen des gleichen Fahrzeugtyps vorkonfiguriert und bedarf dann lediglich noch einer geringen Überprüfung durch das Werkstattpersonal.

Anhand der Raumkoordinatendaten der Beschädigungen in einem bestimmten Bereich der Flächenkoordinatendaten der Oberfläche der Karosserie werden auf Basis der Verformungstiefe als größte negative Differenz zu den Raumkoordinatendaten der unverformten ursprünglichen dreidimensionalen Form der Oberfläche auch Beschädigungen von verdeckten Teilen erkannt, die zu ersetzen sind, so dass der erforderlichen Umfang einer Reparatur mit einer hohen Prognosesicherheit bestimmbar ist.

In einer vorteilhaften Weiterbildung werden den aus bestehenden Vorgangsdatensätzen ausgegebenen, bestehenden Reparaturdaten Einheitspreise zugeordnet und es wird mittels der Auswerteeinheit aus den Reparaturdaten und den Einheitspreisen eine Berechnung der Reparaturkosten durchgeführt. Einheitspreise sind beispielsweise Stundensätze oder Ersatzteilpreise.

Die Berechnung der voraussichtlichen Reparaturkosten kann auf diese Weise für jede Werkstatt individualisiert erfolgen, da diese ihre individuellen Preise, wie Stundensätze, zugrunde legen kann.

Ebenso können auch Preisänderungen für Ersatzteile gegenüber denen aus bestehenden Reparaturkostendaten aus den Vorgangszusatzdaten berücksichtigt werden.

In Abgrenzung zu den wie beschrieben gebildeten voraussichtlichen Reparaturkosten stehen die Reparaturkostendaten, welche die tatsächlichen Kosten, wie sie auf Basis möglicherweise anderer Einheitspreise und etwaiger Rabatte, Kulanzregelungen oder Ähnlichem zustande gekommen sind. Die Reparaturkostendaten dienen zur ergänzenden Information und zu Analyse- und Archivierungszwecken, während die Ersatzteildaten und Arbeitszeitdaten eine Reparaturkostenprognose auf Basis aktueller Einheitspreise ermöglichen.

Eine weitere anderen vorteilhaften Weiterbildung des Verfahren sieht eine Initialisierungs- bzw. Einlernphase wie folgt vor. Werden mit dem Auswertungs- und Zuordnungsvorgang in der Datenbank der Auswerteeinheit keine bestehenden Vorgangsdatensätze mit entsprechenden, bestehenden Flächenkoordinaten von Beschädigungen aufgefunden, ergeht von der Auswerteeinheit eine Auforderung zur manuellen Eingabe von Reparaturdaten und optional von Vorgangszusatzdaten. Die Reparaturdaten und optional die Vorgangszusatzdaten werden daraufhin von einem Werkstattmitarbeiter manuell eingegeben.

Als Vorteil lassen sich somit bisher nicht in vorhandenen Vorgangsdatensätzen erfasste Fahrzeuge oder Beschädigungsbilder und deren Reparatur aufnehmen, auf deren Reparaturdaten bei späteren Reparaturen des gleichen Fahrzeugtyps mit äquivalenten Beschädigungen zugreifbar ist.

Nach einer weiteren vorteilhaften Weiterbildung werden bei Beschädigungen in einem äquivalenten Beschädigungsbereich die in aufgefundenen, bestehenden Vorgangsdatensätzen gespeicherten, bestehenden Reparaturdatensätze in den Vorgangsdatensatz übernommen. Damit ist eine schnelle Reparaturkostenprognose möglich, deren Grad der Zuverlässigkeit mit dem Grad der Übereinstimmung der Verformungstiefe korreliert.

Gemäß einer hierauf aufbauenden Weiterbildung werden die in den Vorgangsdatensatz übernommenen, bestehenden Reparaturdatensätze mit den tatsächlich ermittelten Reparaturdaten abgeglichen, also ergänzt, korrigiert oder teilweise gelöscht. Diese Weiterbildung stellt eine modifizierte Variante der Durchführung einer Inititalisierungs- bzw. Einlernphase dar.

Als besonderer Vorteil ist hierbei zu sehen, dass für künftige Reparaturen gleicher oder ähnlicher Schäden mit äquivalenten Flächenkoordinatendaten, jedoch abweichenden Tiefenkoordinatendaten, der Umfang der Reparatur noch genauer bestimmt werden kann.

Die Datenbank der Vorgangsdatensätze weist somit einen Selbstlerneffekt bzw. einen Optimierungseffekt auf.

Mit der Aufnahme von bisher noch nicht erfassten Beschädigungen und/oder Beschädigungen mit abweichendem Umfang der Reparatur stehen gegenüber üblichen Schadenkalkulationsprogrammen genauere Angaben zum Umfang zukünftiger Reparaturen des identischen Fahrzeugtyps sowie eine breitere Datenbasis zur Verfügung.

In einer vorteilhaften Weiterbildung des Verfahrens werden aus mehreren bestehenden Vorgangsdatensätzen die Reparaturdaten des Vorgangsdatensatzes aus den bestehenden Reparaturdaten in Abhängigkeit von den Verformungstiefendaten mit den jeweiligen bestehenden Verformungstiefendaten berechnet.

Die Berechnung der Reparaturdaten eines Vorgangsdatensatzes einer aktuell bestimmten Beschädigung eines Fahrzeugs, für die im Auswertungs- und Zuordnungsvorgang mehrere bestehende Vorgangsdatensätze in einer Ordnung nach dem Grad der Übereinstimmung zwischen den im Beschädigungsbereich bestimmten Verformungstiefendaten und den in bestehenden Vorgangsdatensätzen gespeicherten Verformungstiefendaten aufgefunden wurden, erfolgt beispielsweise mittels Interpolation, indem die bestimmten Verformungstiefendaten zu den vorhandenen Verformungstiefendaten mit den jeweils zugeordneten Reparaturdaten in Beziehung gesetzt werden.

Des Weiteren lassen sich für entsprechende Flächenkoordinatendaten von Beschädigungen Bereichsgruppen für die Reparatur bilden, wobei die Reparaturdaten hierfür mindestens die erforderlichen Ersatzteildaten und Arbeitszeitdaten aufweisen.

In einer vorteilhaften Weiterbildung des Verfahrens werden Daten aus der dreidimensionalen Erfassung der Oberfläche mit den Norm-Raumkoordinatendaten, wie sie in den Fahrzeugmodelldaten hinterlegt sind, mittels geeigneter Algorithmen verglichen. Wird eine Übereinstimmung festgestellt, ist damit automatisch der Fahrzeugtyp des beschädigten Fahrzeugs identifiziert. Die Fahrzeugtypendaten aus dem Fahrzeugmodelldaten können dann zur Information oder Gegenbestätigung ausgegeben oder automatisch in einen anzulegenden Vorgangsdatensatz übernommen werden. Als besonderer Vorteil wird eine weitere Zeitersparnis, eine weiterreichende Automatisierung und eine größere Sicherheit gegenüber Eingabefehlern erreicht.

In einer weiteren Fortbildung des Verfahrens werden Vorgangsdatensätze oder Teile hiervon von externen Datenbanken in die Datenbank der Auswerteeinheit übernommen.

Mit der Aufnahme von Vorgangsdatendatensätzen aus externen Datenbanken, wie von Datenbanken mehrerer Reparaturwerkstätten, in die Datenbank der Auswerteeinheit kann diese als zentrale Datenbank mit einem gemeinsamen Datenbestand genutzt werden, wodurch für die einzelnen Betriebe mit dem umfassenden Datenbestand in vorteilhafter Weise eine breite Basis für Aussagen zum Umfang der Reparatur der Beschädigung eines Fahrzeugs, den benötigten Ersatzteilen und des erforderlichen Arbeitszeitaufwands vorliegt.

Die Erfindung wird als Ausführungsbeispiel anhand einer computergestützten Bestimmung einer Beschädigung einer Karosserie eines Fahrzeugs nach einem Unfall mit Seitenaufprall im Bereich eines vorderen Kotflügels mittels einer optischen Erfassungseinheit in Form einer Stereokamera zur dreidimensionalen Erfassung einer Oberfläche im Beschädigungsbereich und einer mit der Stereokamera verbundenen Auswerteeinheit, die eine Datenbank aufweist, in der Fahrzeugmodelldaten mit zugehörigen Fahrzeugtypendaten und Norm-Raumkoordinatendaten, die der unverformten ursprünglichen dreidimensionalen Form der Oberfläche des Fahrzeugs entsprechen und in der für jeden Schadensfall ein Vorgangsdatensatz abgelegt wird, näher beschrieben.

Die Norm-Raumkoordinatendaten der Fahrzeugmodelldaten liegen in der Datenbank aus der dreidimensionalen Erfassung der Oberfläche unbeschädigter Fahrzeuge vor und/oder sind alternativ in Form von CAD (Computer Aided Design) - Daten von Fahrzeugherstellern übernommen worden, wobei der Oberfläche ein virtuelles Gitter, in Anlehnung an ein geodätisches Gitter, mit Flächenkoordinatendaten zugeordnet ist.

Im Zustandserfassungsvorgang wird die Oberfläche des Beschädigungsbereichs im Bereich des vorderen Kotflügels mittels der Stereokamera erfasst, deren Daten an die Auswerteeinheit übertragen, von dieser mittels geeigneter Software verarbeitet und die Raumkoordinatendaten der dreidimensional erfassten Oberfläche sowie die zugehörigen Flächenkoordinatendaten ermittelt, die im Vorgangsdatensatz als Beschädigungsdaten gespeichert werden.

Im Beschädigungsbereich des Kotflügels werden die Differenzen der ermittelten Werte der Tiefenkoordinatendaten der Raumkoordinatendaten gegenüber denen der Norm-Raumkoordinaten als größte negative Differenz gegenüber den Tiefenkoordinatendaten der Norm-Raumkoordinaten als Verformungstiefe bestimmt und dem Beschädigungsdatensatz im Vorgangsdatensatz hinzugefügt und im Vorgangsdatensatz gespeichert.

Den Beschädigungsdaten werden die Fahrzeugtypendaten durch manuelle Eingaben anhand den Daten des Fahrzeugscheins, des Fahrzeugbriefs oder gegebenenfalls der Angaben am Fahrzeug zugeordnet.

Die Fahrzeugtypendaten können alternativ automatisch bestimmt werden, indem während der optischen Erfassung des Beschädigungsbereichs charakteristische Details der Oberfläche anhand der bestimmten Raumkoordinatendaten zur Identifikation des Fahrzeugtyps im Rückgriff auf die Norm-Raumkoordinatendaten der Fahrzeugmodelldaten genutzt werden.

Im Bereich des vorderen Kotflügels kann hierzu die Position und Form des Radausschnitts und/oder die der Blinkeinrichtung genutzt werden.

Im nachfolgenden Auswertungs- und Zuordnungsvorgang initiiert und führt die Auswerteeinheit eine Datenbankabfrage, in der auf Basis des Fahrzeugtyps in der Datenbank der Auswerteeinheit bestehende Vorgangsdatensätze des gleichen Fahrzeugtyps ermittelt werden, wobei Daten der aktuell gespeicherten Beschädigungsdaten mit Beschädigungsdaten von Vorgangsdatensätzen der Datenbank des gleichen Fahrzeugtyps korreliert werden.

Im Ergebnis wird ein Vorgangsdatensatz mit Beschädigungsdaten mit äquivalenten oder identischen Flächenkoordinatendaten und mindestens ähnlichen Verformungstiefendaten von Reparaturen früherer Schäden, der Ersatzteildaten mit Angaben der zu wechselnden Teile und Arbeitszeitdaten sowie der zu erwartenden Kosten ausgegeben.

Auf Basis der ermittelten Verformungstiefe im Bereich des beschädigten Kotflügels werden dabei neben dem zu ersetzenden Kotflügel weitere beschädigte, visuell nicht erkennbare, auszutauschende Teile, wie eine Aufhängung, automatisch mit ausgewiesen.

Durch einen Servicemitarbeiter wird abschließend eine kurze Kontrolle am Fahrzeug durchgeführt, um die Plausibilität der Reparaturdaten zu prüfen und eventuell erforderliche Ergänzungen des Umfangs der Reparatur zu erfassen und nachfolgend manuell in den Reparaturdatensatz einzugeben.

Nach Erstellung der kompletten Reparaturdaten erfolgt die computergestützte Auslösung der Ersatzteilbestellung und des Auftrags zur Reparatur mit nachfolgender Durchführung der Reparatur des Fahrzeugs.

Wird bei der Durchführung der Reparatur festgestellt, dass weitere, während der automatischen Bestimmung der Beschädigung des Fahrzeugs nicht ausgewiesene Teile zu ersetzen sind, so wird der Reparaturdatensatz manuell ergänzt.

Die Datenbank mit den Vorgangsdatensätzen ist damit selbstlernend, so dass bei gleichen oder ähnlichen Schäden an gleichen Fahrzeugtypen immer genauere Aussagen mit den Reparaturdaten der Vorgangsdatensätze zum erforderlichen Umfang der Reparatur getroffen werden können.

Günstigerweise sind Vorgangsdatensätze von Datenbanken von Auswerteeinheiten einer Vielzahl von Werkstätten auf einem zentralen Server als gemeinsamer, umfassender Datenbestand zusammengeführt, auf die einzelne Werkstätten Fernzugriff haben.

Die Genauigkeit der Aussagen zum erforderlichen Umfang der Reparatur von identischen oder äquivalenten Beschädigungen eines Fahrzeugtyps wird auf Basis des umfassenden Datenbestands auf Basis bereits früher bestimmter Beschädigungen und deren Reparatur zusätzlich stetig verbessert.

## Patentansprüche

1. Verfahren zur Bestimmung einer Beschädigung eines Fahrzeugs mittels einer optischen Erfassungseinheit zur dreidimensionalen Erfassung einer Oberfläche eines Fahrzeuges und einer Auswerteeinheit, verbunden mit der optischen Erfassungseinheit, mit der Daten der dreidimensional erfassten Oberfläche verarbeitbar und Raumkoordinatendaten der dreidimensional erfassten Oberfläche ermittelbar sind,
**dadurch gekennzeichnet,**
**dass** die Auswerteeinheit eine Datenbank aufweist in der Fahrzeugmodelldaten, aufweisend Fahrzeugtypendaten, Norm-Raumkoordinatendaten des Fahrzeugtyps, ein Vorgangsdatensatz, aufweisend Beschädigungsdaten, Reparaturdaten und optional Vorgangszusatzdaten, wobei die Beschädigungsdaten Fahrzeugtypendaten, Flächenkoordinatendaten der Raumkoordinatendaten eines Beschädigungsbereichs der Oberfläche eines Fahrzeugs, Verformungstiefendaten, wobei die Verformungstiefendaten die größte negative Differenz zwischen den Tiefenkoordinatendaten der Raumkoordinatendaten im Beschädigungsbereich und den in der Datenbank abgelegten Norm-Raumkoordinatendaten aufweisen, wobei die Reparaturdaten Ersatzteildaten und Arbeitszeitdaten aufweisen, und wobei die optionalen Vorgangszusatzdaten, Daten wie Reparaturkostendaten, Fahrzeughalterdaten, Laufleistungsdaten und Beschädigungsereignisdaten aufweisen können, speicherbar sind;
**dass** in einem Zustandserfassungsvorgang die Oberfläche des Fahrzeugs in einem Beschädigungsbereich mittels der optischen Erfassungseinheit optisch dreidimensional erfasst wird,
die Raumkoordinatendaten des Beschädigungsbereichs und hieraus die Flächenkoordinatendaten der Raumkoordinatendaten des Beschädigungsbereichs ermittelt werden, aus den Raumkoordinatendaten des Beschädigungsbereichs und den Norm-Raumkoordinatendaten des Beschädigungsbereichs die Verformungstiefendaten ermittelt werden und die Flächenkoordinatendaten und die zugehörigen Verformungstiefendaten als Beschädigungsdaten in einem Vorgangsdatensatz gespeichert werden;
**dass** in einem Auswertungs- und Zuordnungsvorgang die Auswerteeinheit eine Datenbankabfrage nach bestehenden Vorgangsdatensätzen mit solchen bestehenden Flächenkoordinatendaten durchführt, die den Flächenkoordinatendaten des Beschädigungsbereichs entsprechen und, sofern bestehende Vorgangsdatensätze mit entsprechenden Flächenkoordinaten aufgefunden werden, diese oder Teile hiervon ausgegeben werden, wobei optional die Ausgabe von bestehenden Vorgangsdatensätze in einer Ordnung nach dem Grad der Übereinstimmung zwischen den im Beschädigungsbereich bestimmten Verformungstiefendaten und den in bestehenden Vorgangsdatensätzen gespeicherten Verformungstiefendaten erfolgt.

2. Verfahren nach Anspruch 1,
**dadurch gekennzeichnet,**
**dass** den aus bestehenden Vorgangsdatensätzen ausgegebenen, bestehenden Reparaturdaten Einheitspreise zugeordnet werden und mittels der Auswerteeinheit aus den Reparaturdaten und den Einheitspreisen eine Berechnung der Reparaturkosten durchgeführt wird.

3. Verfahren nach Anspruch 1,
**dadurch gekennzeichnet,**
**dass**, sofern mit dem Auswertungs- und Zuordnungsvorgang in der Datenbank der Auswerteeinheit keine bestehenden Vorgangsdatensätze mit entsprechenden, bestehenden Flächenkoordinaten der Beschädigung aufgefunden werden, von der Auswerteeinheit eine Aufforderung zur manuellen Eingabe von Reparaturdaten und optional von Vorgangszusatzdaten ergeht und die Reparaturdaten und optional die Vorgangszusatzdaten daraufhin manuell eingegeben werden.

4. Verfahren nach Anspruch 1,
**dadurch gekennzeichnet,**
**dass**, die in aufgefundenen, bestehenden Vorgangsdatensätzen gespeicherten, bestehenden Reparaturdatensätze in den Vorgangsdatensatz übernommen werden.

5. Verfahren nach Anspruch 4,
**dadurch gekennzeichnet,**
**dass**, die in den Vorgangsdatensatz übernommenen, bestehenden Reparaturdatensätze mit tatsächlich ermittelten Reparaturdaten abgeglichen werden.

6. Verfahren nach Anspruch 1,
**dadurch gekennzeichnet,**
**dass** aus mehreren bestehenden Vorgangsdatensätzen die Reparaturdaten des Vorgangsdatensatzes aus den bestehenden Reparaturdaten in Abhängigkeit von den Verformungstiefendaten mit den jeweiligen bestehenden Verformungstiefendaten berechnet werden.

7. Verfahren nach Anspruch 1, **dadurch gekennzeichnet,**
**dass** von der Auswerteeinheit Daten aus der dreidimensionalen Erfassung der Oberfläche des Fahrzeugs mit Norm-Raumkoordinatendaten, die als Fahrzeugmodelldaten in der Datenbank gespeichert sind, verglichen werden und bei Übereinstimmung eine automatische Identifizierung des Fahrzeugtyps erfolgt.

8. Verfahren nach Anspruch 1,
**dadurch gekennzeichnet,**
**dass** Vorgangsdatensätze oder Teile hiervon von externen Datenbanken in die Datenbank der Auswerteeinheit übernommen werden.

## Claims

1. A method for determining a damage to a vehicle by using an optical detect unit for the three-dimensional capture of a surface of a vehicle and an analysis unit, being connected to the optical detect unit, by means of which data of the three-dimensionally captured surface can be processed and space coordinate data of the three-dimensionally captured surface can be determined,
**characterized in**
**that** the analysis unit has a database in which vehicle model data, comprising vehicle type data and standard space coordinate data of the vehicle type, and an event data record, comprising damage data, repair data and optionally additional event data, can be stored, wherein the damage data comprise vehicle type data, surface coordinate data of the space coordinate data of a damage area of the surface of a vehicle, deformation depth data, wherein the deformation depth data are the largest negative difference between the depth coordinate data of the space coordinate data in the damage area and the standard space coordinate data stored in the database, wherein the repair data comprise spare part data and working time data, and wherein the optional additional event data can comprise such data as repair cost data, vehicle owner data, mileage data and damage event data;
**that** in a status detection process, the surface of the vehicle in a damage area is optically recorded in a three-dimensional manner by means of the optical detect unit,
the space coordinate data of the damage area and therefrom the surface coordinate data of the space coordinate data of the damage area are determined, the deformation depth data are determined from the space coordinate data of the damage area and the standard space coordinate data of the damage area, and the surface coordinate data and the associated deformation depth data are stored as damage data in an event data record;
**that** in an analysis and assignment process the analysis unit performs a database query for existing event data records with such existing surface coordinate data which correspond to the surface coordinate data of the damage area and, if existing event data records with corresponding surface coordinates are found, these or parts thereof are output, wherein optionally existing event data records are output in an order according to the degree of correspondence between the deformation depth data determined in the damage area and the deformation depth data stored in the existing event data records.

2. The method according to claim 1,
**characterized in**
**that** from existing event data records unit prices are assigned to the output, existing repair data and the analysis unit calculates the repair costs on the basis of the repair data and the unit prices.

3. The method according to claim 1,
**characterized in**
**that**, unless in the analysis and assignment process existing event data records with corresponding, existing surface coordinates of the damage are found in the database of the analysis unit, the analysis unit requests the manual input of repair data and optionally of additional event data, and the repair data and optionally the additional event data are then entered manually.

4. The method according to claim 1,
**characterized in**
**that** the existing repair data records stored in found, existing event data records are transferred to the event data record.

5. The method according to claim 4,
**characterized in**
**that** the existing repair data records transferred to the event data record are compared with actually determined repair data.

6. The method according to claim 1,
**characterized in**
**that** the repair data of the event data record are calculated, in dependence on the deformation depth data, from the existing repair data with the corresponding existing deformation depth data of several existing event data records.

7. The method according to claim 1, **characterized in**
**that** the analysis unit compares data from the three-dimensional capture of the surface of the vehicle with standard space coordinate data, which are stored as vehicle model data in the database, and if they match the vehicle type will be automatically identified.

8. The method according to claim 1,
**characterized in**
**that** event data records or parts thereof are transferred from external databases to the database of the analysis unit.

## Revendications

1. Procédé pour déterminer un dommage sur un véhicule au moyen d'une unité de saisie optique pour la saisie tridimensionnelle d'une surface d'un véhicule et d'une unité d'analyse reliée à ladite unité de saisie optique, à l'aide de laquelle les données de la surface saisie de façon tridimensionnelle peuvent être traitées et les coordonnées spatiales de la surface saisie de façon tridimensionnelle peuvent être déterminées, est **caractérisé en ce**
**que** l'unité d'analyse comporte une base de données dans laquelle des données modèles du véhicules, comportant des données du type de véhicule, coordonnées spatiales normales du type de véhicule, un enregistrement de données de processus, comportant des données d'endommagement, des données de réparation et des données supplémentaires de processus comme option, et les données d'endommagement comportant des données du type de véhicule, des données de coordonnées surfaciques des données de coordonnées spatiales d'une zone endommagée de la surface d'un véhicule, des données de profondeur de déformation, et les données de profondeur de déformation présentant la plus grande différence négative entre les données de coordonnées de profondeur pour les données de coordonnées spatiales dans la zone endommagée et les données de coordonnées spatiales normales mémorisées dans la base de données et les données de réparation comportant des données de pièces de rechange et des données de temps de travail et les données supplémentaires de processus optionnelles pouvant inclure des données comme les données de coût de réparation, des données relatives aux détenteurs de véhicules, des données de kilométrage du véhicule et des données relatives aux événements d'endommagement, peuvent être mémorisées;
**que** lors d'un processus de saisie d'état, la surface du véhicule dans une zone endommagée est saisie optiquement de façon tridimensionnelle au moyen d'une unité de saisie optique,
les données des coordonnées spatiales de la zone endommagée et les données de coordonnées surfaciques des données de coordonnées spatiales d'une zone endommagée sont déterminées, les données de profondeur de déformation peuvent être déterminées sur la base des données des coordonnées spatiales de la zone endommagée et des données de coordonnées spatiales normales de la zone endommagée et les données de coordonnées surfaciques et les données de profondeur de déformation sont mémorisées dans un enregistrement de données de processus comme données d'endommagement;
**que** lors d'un processus d'analyse et de mise en correspondance, l'unité d'analyse procède à une interrogation de la base de données pour rechercher des enregistrements de données de processus avec de tels données de coordonnées surfaciques existantes correspondant aux données de coordonnées surfaciques de la zone endommagée et, si des enregistrements de données de processus incluant des coordonnées surfaciques correspondantes existent, fournit celles-ci ou des parties de celles-ci en sortie, et comme option les enregistrements de données de processus existants sont sortis selon un ordre suivant le degré de concordance entre les données de profondeur de déformation détectées pour la zone endommagée et les données de profondeur de déformation mémorisées dans les enregistrements de données de processus existants.

2. Procédé suivant la revendication 1
est **caractérisé en ce**
**que** des prix unitaires sont assignés aux données de réparation existantes, résultant des enregistrements de données de processus existants et que l'unité d'analyse effectue un calcul des coûts de réparation sur la base des données de réparation et des prix unitaires.

3. Procédé suivant la revendication 1
est **caractérisé en ce**
**que** si aucuns enregistrements de données de processus contenant des données de coordonnées surfaciques existantes correspondant aux données de coordonnées surfaciques de la zone endommagée ne sont détectés dans la base de données au moyen du processus d'analyse et de mise en correspondance, l'unité d'analyse lance une demande pour saisir manuellement des données de réparation et des données supplémentaires de processus comme option et les données de réparation et les données supplémentaires de processus optionnelles sont ensuite saisies manuellement.

4. Procédé suivant la revendication 1
est **caractérisé en ce**
**que** les enregistrements de données de réparation existants, mémorisés dans les enregistrements de données de processus existants, détectés sont transférés dans l'enregistrement de données de processus.

5. Procédé suivant la revendication 4
est **caractérisé en ce**
**que** les enregistrements de données de réparation existants, mémorisés dans l'enregistrement de données de processus sont alignés avec des données de réparation effectivement déterminées.

6. Procédé suivant la revendication 1
est **caractérisé en ce**
**que** sur la base de plusieurs enregistrements de données de processus existants, les données de réparation de l'enregistrement de données de processus sont calculées sur la base des données de réparation existantes en fonction des données de profondeur de déformation avec les données de profondeur de déformation respectivement existantes.

7. Procédé suivant la revendication 1 est **caractérisé en ce**
**que** l'unité d'analyse compare des données provenant de la saisie tridimensionelle de la surface du véhicule avec des coordonnées spatiales normales qui sont mémorisées comme données modèles du véhicule dans la base de données et le type de véhicule est automatiquement identifié en cas de concordance.

8. Procédé suivant la revendication 1
est **caractérisé en ce**
**que** des enregistrements de données de processus ou des parties de ceux-ci sont assumés par des bases de données externes pour être intégrés dans la base de données de l'unité d'analyse.
